# EUROPÄISCHE PATENTSCHRIFT

(11) **EP 0 655 485 B1**
(45) Veröffentlichungstag und Bekanntmachung des Hinweises auf die Patenterteilung: **29.12.1999**
(21) Anmeldenummer: 94118127.3
(22) Anmeldetag: 17.11.1994
(51) Int. Cl.: C09B 67/52, C09B 67/10, C09B 48/00, C09B 67/22

(54) **Verfahren zur Herstellung von linearen, unsubstituierten Chinacridonpigmenten der beta-Phasen**
Process for the manufacture of linear non-substituted quinacridone pigments in the beta phase
Procédé de fabrication de pigments de quinacridone linéaire non sustituée de la phase béta

(30) Priorität: 25.11.1993 DE 4340125
(43) Veröffentlichungstag der Anmeldung: 31.05.1995
(73) Patentinhaber: Clariant GmbH, 65929 Frankfurt am Main (DE)
(72) Erfinder: Urban, Manfred, D-65205 Wiesbaden (DE); Dietz, Erwin, Dr., Wilmington, DE 19808 (US)

(56) Entgegenhaltungen:
- EP-A- 0 305 328
- EP-A- 0 517 662
- EP-A- 0 517 663
- FR-A- 1 265 225

## Beschreibung

Die vorliegende Erfindung liegt auf dem technischen Gebiet der Chinacridonpigmente und betrifft ein umweltfreundliches Verfahren zur Herstellung von linearen, unsubstituierten Chinacridonpigmenten der β-Phase.

Verfahren zur Herstellung von linearen, unsubstituierten Chinacridonpigmenten der β-Phase sind bereits seit langem bekannt. Beispielsweise erfolgt die Herstellung nach der US-A-2 844 485 durch Mahlung der trockenen grobkristallinen Chinacridon-Rohpigmente der α-Phase mit Salz und einem flüssigen Kohlenwasserstoff oder durch Behandlung in einer Mischung aus Nitrobenzol und Aluminiumchlorid. Wegen der hohen Salzbelastung der dabei anfallenden Abwässer sind diese Verfahren ökologisch bedenklich und sehr teuer. Eine Mischung aus Nitrobenzol und Aluminiumchlorid kann sich außerdem explosionsartig zersetzen. Die Verfahren gemäß US-A-2 844 485 setzen eine Trocknung des Chinacridon-Rohpigments voraus, ohne die die Umwandlung in die β-Phase nicht möglich ist.

Die EP-A-0 517 663 offenbart ein Verfahren zur Herstellung modifizierter β-Chinacridonpigmente, wobei grobkristalline Chinacridon-Rohpigmente der β-Phase trocken vorgemahlen und anschließend in Gegenwart von Alkohol und Base naßvermahlen werden. Durch eine weitere Behandlung mit organischen Peroxiden, H₂O₂, Luft oder Stickstoff-Sauerstoff-Gemischen kann die Farbtiefe verbessert werden.

Die DE-A-1 150 046 beschreibt ein Verfahren zur Herstellung von unsubstituierten Chinacridonpigmenten der β-Phase durch Erhitzen von 2,5-Dianilinoterephthalsäure in Polyphosphorsäure oder Polyphosphorsäureester und anschließende Behandlung des dabei erhaltenen feuchten Chinacridon-Rohpigments in Gegenwart einer acht- bis zwölffachen Menge einer 5 bis 20 gewichtsprozentigen Alkalilösung, bezogen auf das Chinacridon-Rohpigment, wobei die Umwandlung in die β-Phase erfolgt. Die feinteiligen Chinacridon-Rohpigmente der β-Phase werden anschließend durch einen Lösemittelfinish in die Pigmentform überführt. Die dabei anfallenden großen Mengen Alkali belasten das Abwasser und machen das Verfahren unwirtschaftlich.

Der vorliegenden Erfindung lag die Aufgabe zugrunde, ein ökologisch und ökonomisch günstiges Verfahren zur Herstellung von linearen, unsubstituierten Chinacridonpigmenten mit hervorragenden coloristischen Eigenschaften zur Verfügung zu stellen, das die Nachteile des Standes der Technik überwindet.

Es wurde nun gefunden, daß man das durch Ringschluß von 2,5-Dianilinoterephthalsäure in Polyphosphorsäure oder Polyphosphorsäureester hergestellte und überwiegend in der α-Phase vorliegende feinteilige Chinacridon-Rohpigment in die reine β-Phase umwandeln kann, wenn man das feuchte Chinacridon-Rohpigment, vorzugsweise nach einer Naßmahlung, zur Phasenumwandlung und Überführung in die Pigmentform bei 120 bis 200°C in einer 0,1 bis 1,5fachen Menge einer anorganischen Base in Wasser und alkalibeständigen Lösemitteln behandelt und gegebenenfalls das Pigment mit einem Peroxodisulfat nachbehandelt.

Gegenstand der vorliegenden Erfindung ist ein Verfahren zur Herstellung von linearen, unsubstituierten Chinacridonpigmenten oder -pigmentzubereitungen der β-Phase, dadurch gekennzeichnet, daß man
a) 2,5-Dianilinoterephthalsäure in Polyphosphorsäure oder einem Polyphosphorsäureester zum Chinacridon cyclisiert,
b) anschließend mit Wasser bei einer Temperatur von mindestens 40°C, vorzugsweise von 60 bis 100°C, zum feinteiligen Chinacridon-Rohpigment, das überwiegend in der α-Phase vorliegt, hydrolysiert,
c) dann gegebenenfalls das feinteilige Chinacridon-Rohpigment aus b) einer Naßmahlung zum Präpigment unterwirft und
d) dann das Rohpigment aus b) oder das Präpigment aus c) in Gegenwart einer 0,05 bis 0,3 fachen Menge einer anorganischen Base, bezogen auf das Gewicht des Rohpigments, in einem inerten flüssigen Medium auf eine Temperatur zwischen 120 und 200°C erhitzt.

Für das erfindungsgemäße Verfahren zur Herstellung der genannten Chinacridonpigmente der β-Phase werden zweckmäßigerweise die bei der in DE-A-1 150 046 beschriebenen Synthese (Schritte a) und b) anfallenden Rohpigmente eingesetzt, die zwar in sehr feiner Verteilung, aber oft in agglomerierter Form vorliegen. Der Agglomerationszustand der Rohpigmente ist abhängig von der Zusammensetzung und der Reinheit der verwendeten Ausgangsprodukte und von den Herstellbedingungen. Zur Erhöhung der Farbstärke ist es von Vorteil, vor dem Lösemittelfinish (Schritt d) durch eine Naßmahlung den Agglomerationszustand der Rohpigmente zu verringern, d.h. eine Dispergierung durchzuführen.

c) Für die Naßmahlung eignen sich alle Dispergierapparate und alle diskontinuierlichen und kontinuierlichen Rührwerkskugel-, Roll- und Schwingmühlen. Hierbei ist eine hohe Mahlwirkung von Vorteil. Besonders geeignet sind Rührwerkskugelmühlen. Als Mahlkörper für diese Mühlen dienen beispielsweise Kugeln aus Zirkonoxid, Zirkonmischoxid, Aluminiumoxid oder Quarz mit einem Durchmesser kleiner als 2 mm; zweckmäßig werden Mahlkörper mit einem Durchmesser von 0,2 bis 2 mm, vorzugsweise 0,3 bis 1 mm, verwendet. Beim Einsatz von kontinuierlichen Rührwerkskugelmühlen zum Naßmahlen erfolgt die Abtrennung der Mahlkörper vom Mahlgut vorzugsweise durch Zentrifugalabscheidung, so daß die Trennvorrichtungen von den Mahlkörpern praktisch nicht berührt werden, wodurch man Verstopfungen der Trennvorrichtungen weitgehend verhindern kann. Die Rührwerkskugelmühlen werden hierbei mit hohem Mahlkörperfüllgrad betrieben.

Bei diesen kontinuierlichen Rührwerkskugelmühlen wird der Mahlraum nahezu vollständig mit Mahlkörpern ausgefüllt.

Zur Naßmahlung wird der feuchte Preßkuchen des Chinacridon-Rohpigments mit Wasser bis zu einer mahlfähigen Konsistenz verdünnt, gegebenenfalls werden geringe Mengen Lösemittel, anorganische Basen, oberflächenaktive Mittel oder eine Mischung dieser Stoffe zugesetzt. Zur Ermittlung der geeigneten Mahlbedingungen sind Vorversuche notwendig. Die Mahlung wird vorzugsweise im wäßrigen oder im wäßrig-organischen Medium unter Zusatz von geringen Mengen eines organischen Lösemittels, vorzugsweise bis zu 10 Gew.-%, bezogen auf das gesamte Mahlgut, in homogener Mischung durchgeführt. Es ist auch möglich, die Mahlung im organischen Medium durchzuführen. Vorzugsweise wird die Mahlung im alkalischen pH-Bereich, vorzugsweise pH 9 bis 13, durchgeführt.

Die Konzentration des Chinacridon-Rohpigments im Mahlgut ist abhängig von der Rheologie der Suspension und beträgt zweckmäßigerweise höchstens 40 Gew.-%, vorzugsweise 5 bis 35 Gew.-%, insbesondere 5 bis 20 Gew.-%, der Mahlgutsuspension.

Als Basen für die Naßmahlung kommen insbesondere Natronlauge, Kalilauge, Natriumcarbonat, Kaliumcarbonat, Calciumhydroxid und Ammoniak in Betracht. Auch Mischungen der genannten Basen können verwendet werden.

Als organische Lösemittel, die vorteilhaft der Mahlgutsuspension zugegeben werden, kommen in Frage: Mit Wasser mischbare C₁-C₈-Alkanole wie Methanol, Ethanol, n-Propanol, Isopropanol, n-Butanol, tert.-Butanol, Isobutanol, Pentanole, Hexanole oder Alkylhexanole; cyclische Alkanole wie Cyclohexanol; C₁-C₅-Dialkylketone wie Aceton, Diethylketon, Methylisobutylketon oder Methylethylketon, sowie Cyclohexanon; Ether und Glykolether wie Tetrahydrofuran, Dimethoxyethan, Methylglykol, Ethylglykol, Butylglykol, Ethyldiglykol, Methoxypropanol oder Methoxybutanol; aliphatische Säureamide wie Formamid oder Dimethylformamid; cyclische Carbonsäureamide wie N-Methylpyrrolidon, Valero- oder Caprolactam; heterocyclische Basen wie Pyridin, Morpholin oder Picolin; sowie Dimethylsulfoxid oder Mischungen dieser Lösungsmittel mit Wasser. Für die Mahlung besonders bevorzugt sind Wasser und Lösungen von C₁-C₆-Alkanolen in Wasser, insbesondere eine Lösung von Isobutanol in Wasser.
Die Mahlung wird bei Temperaturen im Bereich von 0 bis 100°C, zweckmäßig bei einer Temperatur zwischen 10 und 60°C, vorzugsweise bei 20 bis 50°C, durchgeführt.

Die Mahldauer ist abhängig von den Feinheitsanforderungen für das jeweilige Anwendungsgebiet, beispielsweise das Lack-, Druck- oder Kunststoffgebiet. Die Verweilzeit des Mahlguts in der Rührwerkskugelmühle liegt je nach geforderter Feinheit im allgemeinen zwischen 5 und 150 Minuten. Zweckmäßig erweist sich eine Dauer von 5 bis 45 Minuten, vorzugsweise 10 bis 30 Minuten.

Während der Mahlung bleibt die Phase des eingesetzten Chinacridon-Rohpigments weitgehend erhalten. Nach der Mahlung liegen die Chinacridone in feinteiliger und dispergierter Form vor und werden als Präpigmente bezeichnet.

d) Die feinteiligen Präpigmente werden in wäßriger Suspension, gegebenenfalls nach weiterer Zugabe von Base und vorzugsweise nach Beimischung von alkalibeständigen organischen Lösemitteln, einer thermischen Behandlung (Lösemittelfinish) unterzogen, wobei die Überführung in die β-Phase erfolgt.

Es ist auch möglich, die feinteiligen Rohpigmente ohne vorherige Naßmahlung dem Lösemittelfinish direkt zu unterziehen, jedoch wird in einigen Fällen die optimale Farbstärke nicht erreicht.

Als Lösemittel für einen Finish kommen alkalibeständige Lösemittel in Frage, beispielsweise C₁-C₈-Alkanole und alicyclische Alkohole, wie Methanol, Ethanol, n-Propanol oder Isopropanol, n-Butanol, Isobutanol oder tert.-Butanol, Pentanole, Hexanole, Cyclohexanol; Glykolether, wie Monomethyl- oder Monoethylether des Ethylen- oder Propylenglykols, Butylglykol, Ethyldiglykol oder Methoxybutanol. Bevorzugte organische Lösemittel sind C₁-C₆-Alkanole, insbesondere Ethanol, Propanole, Butanole und Pentanole, besonders bevorzugt sind Butanole und Isopropanol.

Als Basen für die Phasenumwandlung kommen anorganische Basen, beispielsweise Natronlauge, Kalilauge, Natriumcarbonat, Kaliumcarbonat, Calciumhydroxid und Ammoniak in Betracht. Auch Mischungen der genannten Basen können verwendet werden.

Die für die Durchführung des Lösemittelfinishs einzuhaltenden Bedingungen sind in hohem Maße von den angestrebten Eigenschaften der Pigmente abhängig und werden jeweils daraufhin ausgerichtet. Normalerweise wird die Suspension der Rohpigmente oder Präpigmente in dem inerten flüssigen Medium zur Phasenumwandlung und Überführung in die Pigmentform bei einer Temperatur im Bereich zwischen 120 und 200°C, unter erhöhtem Druck, 1 bis 24 Stunden behandelt. Zweckmäßigerweise wird dafür die nach der Naßmahlung erhaltene Suspension ohne Zwischenisolierung des Mahlguts eingesetzt. Es können jedoch auch die vorstehend genannten Lösemittel und anorganischen Basen zugegeben werden, wobei die zugefügte Lösemittelmenge innerhalb weiter Grenzen schwanken kann. Bevorzugt verwendet man eine 0,5- bis 10-fache, vorzugsweise 1- bis 5-fache Gewichtsmenge Lösemittel, bezogen auf das Gewicht der Rohigmente oder Präpigmente, so daß in Bezug auf die flüssige Phase eine mindestens 5 gew.-%ige Lösung vorliegt. Bezogen auf das Roh- oder Präpigment muß die 0,05 bis 0,3-fache, vorzugsweise 0,05 bis 0,113-fache Gewichtsmenge der anorganischen Base zugegen sein. Weiterhin ist es zweckmäßig, daß die Base als 0,1 bis 2,0 gewichtsprozentige, vorzugsweise als 0,5 bis 1,5 gewichtsprozentige, wäßrige Lösung eingesetzt wird. Die thermische Behandlung im alkalischen, wäßrig-organischen Medium erfolgt bevorzugt bei 125 bis 175°C, zweckmäßigerweise unter erhöhtem Druck, für die Dauer von 1 bis 6 Stunden. Nach beendetem Finish können die verwendeten Lösemittel zurückgewonnen und erneut eingesetzt werden.

Das entstandene Produkt wird als Chinacridon-Pigment bezeichnet. Die Teilchengröße der Pigmentpartikel liegt unter 0,2 µm.

Zur Verbesserung der coloristischen Eigenschaften kann nach dem Lösemittelfinish, zweckmäßigerweise nach Entfernung der Lösemittel, eine Behandlung mit einem Peroxodisulfat bei einer Temperatur von mindestens 50°C, vorzugsweise bei 60 bis 160°C, durchgeführt werden. Die Menge des eingesetzten Peroxodisulfats richtet sich nach dem gewünschten coloristischen Effekt. Bezogen auf das Gewicht des Pigments, werden vorzugsweise 1 bis 10 Gew.-% Peroxodisulfat eingesetzt. Das Peroxodisulfat kann in fester Form oder als wäßrig-alkalische Lösung zugesetzt werden. Die durch die Oxidation mit dem Peroxodisulfat verbrauchte Alkalimenge kann durch Alkalizusatz vor oder während der Oxidation kompensiert werden. Als Peroxodisulfate kommen insbesondere Natrium-, Kalium- oder Ammoniumperoxodisulfat in Betracht.

Weiterhin können zur Verbesserung der coloristischen Eigenschaften vor, während oder nach der Naßmahlung, während oder nach der Finishbehandlung oder während oder nach der Isolierung des Pigments oberflächenaktive Stoffe und/oder Pigmentdispergatoren zugesetzt werden. Der am besten geeignete Zeitpunkt muß zuvor durch orientierende Versuche ermittelt werden. Die Zugabe der oberflächenaktiven Stoffe und/oder Pigmentdispergatoren kann auf einmal oder in mehreren Portionen erfolgen.

Geeignete oberflächenaktive Stoffe sind beispielsweise kationische, anionische oder nichtionische Tenside, vorzugsweise Fettsäuretauride, Fettsäuresarkoside, Fettalkoholpolyglykolether, Alkylphenolpolyglykolether, Alkansulfonsäuren sowie ihre Salze, Alkylphenylsulfonsäuren sowie ihre Salze und Alkylphenolpolyglykolethersulfate. Weiterhin kommen rheologisch wirksame Additive, Pigmentdispergatoren auf Basis von Chinacridonpigmenten, Entschäumer und Extender in Betracht.

Geeignete Pigmentdispergatoren auf Basis von Chinacridonpigmenten sind beispielsweise Verbindungen mit der allgemeinen Formel (I),

P - [X]ₘ (I)

in welcher
- P: für den m-wertigen Rest eines linearen, unsubstituierten Chinacridons steht, worin
- m: eine Zahl von 1 bis 4 ist,
- X: eine Gruppe der Formel (II) 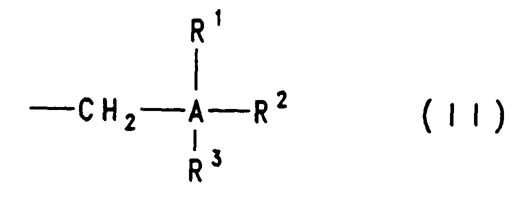 darstellt, worin A einen fünf- oder sechsgliedrigen aromatischen, gegebenenfalls kondensierten, Heterocyclus darstellt, welcher 1 bis 3 gleiche oder unterschiedliche Heteroatome aus der Reihe Stickstoff, Sauerstoff oder Schwefel enthält, vorzugsweise Imidazolyl oder Indolyl, und der Heterocyclus über ein Kohlenstoffatom an die Methylengruppe gebunden ist,
R¹ und R² ein Wasserstoffatom, eine C₁-C₄-Alkyl-, eine C₂-C₄-Alkenyl- oder eine Arylgruppe, vorzugsweise Phenylgruppe, bedeuten, oder R¹ und R² gemeinsam einen aliphatischen oder aromatischen Ring bilden,
R³ ein Wasserstoffatom, eine C₁-C₄-Alkyl-, eine C₁-C₃-Hydroxyalkyl- oder eine C₂-C₄-Alkenylgruppe bedeutet,
oder worin

- X: eine Gruppe der Formel (III) 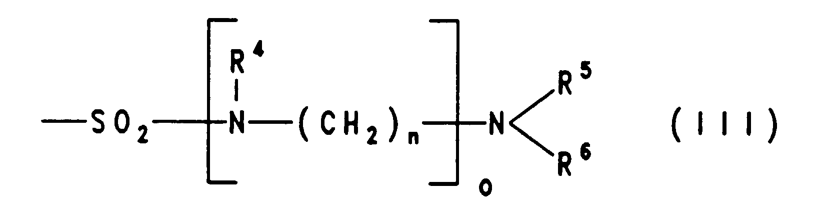
darstellt, worin R⁵ und R⁶ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R⁵ und R⁶ gemeinsam mit dem angrenzenden Stickstoffatom einen aliphatischen oder aromatischen, fünf- oder sechsgliedrigen heterocyclischen Ring bilden, mit jeweils 1 bis 3 ringangehörigen, gleichen oder unterschiedlichen Heteroatomen aus der Reihe Stickstoff, Sauerstoff oder Schwefel, vorzugsweise Morpholinyl oder Pyrrolidinyl, R⁴ ein Wasserstoffatom oder eine C₁-C₄-Alkylgruppe ist, n eine Zahl von 1 bis 6 und o die Zahl 1 oder 2 ist.

Durch Zusatz der genannten Pigmentdispergatoren werden Pigmentzubereitungen erhalten. Die Pigmentdispergatoren werden in einer Menge von 1 bis 10 Gew.-%, bezogen auf das Basispigment, zugesetzt.

Durch die Wahl des organischen Lösemittels und der anorganischen Base, deren Konzentrationen, die Auswahl der Temperatur und die Dauer der Finishbehandlung lassen sich je nach dem gewünschten Verwendungszweck rotviolette Chinacridonpigmente der β-Phase herstellen, die entweder eine höhere Transparenz oder eine höhere Deckkraft besitzen. Durch die Menge des Oxidationsmittels lassen sich die Farbtiefe und der Farbton einstellen. Gleichzeitig wird dabei die Farbstärke erhöht.

Die Herstellung von Chinacridonpigmenten der β-Phase nach dem erfindungsgemäßen Verfahren hat sich als besonders wirtschaftlich und umweltfreundlich erwiesen, weil bei der Feinverteilung der Rohpigmente durch Naßmahlung keine Verschmutzung der Luft aufgrund von Staubentwicklung auftritt. Außerdem werden nur geringe Mengen an Chemikalien und Lösemitteln eingesetzt, welche anschließend weiterverarbeitet, wieder vollständig regeneriert oder problemlos entsorgt werden können, so daß insgesamt keine Entsorgungsprobleme auftreten.

Es war überraschend und nicht vorhersehbar, daß nach dem erfindungsgemäßen Verfahren die vollständige Umwandlung von Chinacridon-Rohpigmenten in die Pigmentform der β-Phase mit weniger als dem zehnten Teil der in der DE-A-1 150 046 benötigten Alkalimenge gelingt. Überraschend war ferner, daß die coloristischen Eigenschaften durch die Nachbehandlung mit Peroxodisulfaten verbessert werden können, während andere Oxidationsmittel, die in der EP-A-0 517 663 für Chinacridonpigmente vorgeschlagen werden, bei Einsatz im vorliegenden Verfahren nicht wirksam sind.

Die nach der vorliegenden Erfindung erhältlichen Pigmente und Pigmentzubereitungen zeichnen sich aus durch ihre hervorragenden coloristischen und rheologischen Eigenschaften, insbesondere durch Flockungsstabilität, Dispergierbarkeit, Rheologie, Glanzverhalten und Farbstärke.

Die erfindungsgemäß hergestellten Pigmente und Pigmentzubereitungen lassen sich zum Pigmentieren von hochmolekularen organischen Materialien natürlicher oder synthetischer Herkunft einsetzen.

Hochmolekulare organische Materialien, die mit den genannten Pigmenten und Pigmentzubereitungen pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmente und Pigmentzubereitungen als Verschnitt oder in Form von Präparationen oder Dispersionen zu benutzen. Bezogen auf das zu pigmentierende hochmolekulare organische Material, setzt man die erfindungsgemäß hergestellten Pigmente und Pigmentzubereitungen in einer Menge von 0,1 bis 10 Gew.-% ein.

Besonders bevorzugte Lacksysteme sind die neuartigen, wäßrigen Lacke sowie die lösemittelarmen High-Solid-Lacke mit hohem Festkörperanteil. Geeignet sind auch die herkömmlichen Lacksysteme aus der Klasse der Alkydmelaminharzlacke und Zweikomponentenlacke auf Basis von mit polyfunktionellen Isocyanaten vernetzbaren Alkyd- und Acrylharzen.
Die erfindungsgemäß hergestellten Pigmente und Pigmentzubereitungen sind in vielen Anwendungsmedien leicht und bis zu hohen Feinheiten dispergierbar. Solche Pigmentdispersionen besitzen eine hohe Flockungsstabilität und zeigen hervorragende rheologische Eigenschaften selbst bei hoher Pigmentierung. Mit ihnen lassen sich Lackierungen und Drucke von hoher Farbstärke, hohem Glanz und hoher Transparenz mit ausgezeichneten Echtheitseigenschaften erzielen.

Zur Beurteilung der Eigenschaften der erfindungsgemäß hergestellten Pigmente und Pigmentzubereitungen auf dem Lacksektor wurden aus der Vielzahl der bekannten Lacke ein aromatenhaltiger Alkydmelaminharzlack (AM) auf Basis eines mittelöligen, nichttrocknenden Alkydharzes aus synthetischen Fettsäuren und Phthalsäureanhydrid sowie eines butanolveretherten Melaminharzes und Anteilen eines nichttrocknenden Alkydharzes auf Basis von Ricinussäure (kurzölig), ein High-Solid- Acrylharzeinbrennlack auf Basis einer nichtwäßrigen Dispersion (HSS) sowie ein wäßriger Lack auf Polyurethanbasis (PUR) ausgewählt.

Zur Beurteilung der Eigenschaften der nach der vorliegenden Erfindung hergestellten Pigmente und Pigmentzubereitungen auf dem Kunststoffgebiet wurde aus der Vielzahl der bekannten Kunststoffe Weichpolyvinylchlorid (PVC) ausgewählt.

Zur Beurteilung der Eigenschaften der nach der vorliegenden Erfindung hergestellten Pigmente und Pigmentzubereitungen in der Drucktechnik wurden aus der Vielzahl der bekannten Drucksysteme ein Tiefdrucksystem auf Nitrocellulosebasis (NC-Druck) ausgewählt.

Die Bestimmung der Farbstärke und des Farbtons erfolgte nach DIN 55986. Die Rheologie des Mahlguts nach der Dispergierung (Millbase-Rheologie) wurde anhand der folgenden fünfstufigen Skala bewertet:
5 dünnflüssig
4 flüssig
3 dickflüssig
2 leicht gestockt
1 gestockt

Nach dem Verdünnen des Mahlguts auf die Pigmentendkonzentration wurde die Viskosität mit dem Viskospatel nach Rossmann, Typ 301 der Firma Erichsen, Iserlohn, beurteilt.

Glanzmessungen erfolgten an Folienaufgüssen unter einem Winkel von 20° nach DIN 67 530 (ASTMD 523) mit dem multigloss®-Glanzmeßgerät der Firma Byk-Mallinckrodt, Wesel.

Die Bestimmung der Kristallphase der Rohpigmente, Präpigmente, Pigmente und Pigmentzubereitungen erfolgte durch Röntgenspektroskopie. Die Aufnahme der Röntgenspektren erfolgte mit Cu Kα-Strahlung.

Figur 1 zeigt das Röntgenbeugungsdiagramm eines linearen, unsubstituierten Chinacridons der β-Phase, erhalten nach Beispiel 1 der vorliegenden Erfindung. Die Peaks bei den Beugungswinkeln 5,65 ; 11,64 ; 15,89 und 26,99 [2Theta] zeigen, daß es sich um eine reine, gut kristalline β-Phase handelt.

Figur 2 zeigt das Röntgenbeugungsdiagramm des entsprechenden Chinacridon-Rohpigments der α-Phase, erhalten wie nachfolgend in Beispiel 1 beschrieben. Die charakteristischen Peaks der α-Phase entsprechen den Beugungswinkeln 6,12 ; 12,36 ; 13,94 ; 25,59 und 27,94 [2Theta].

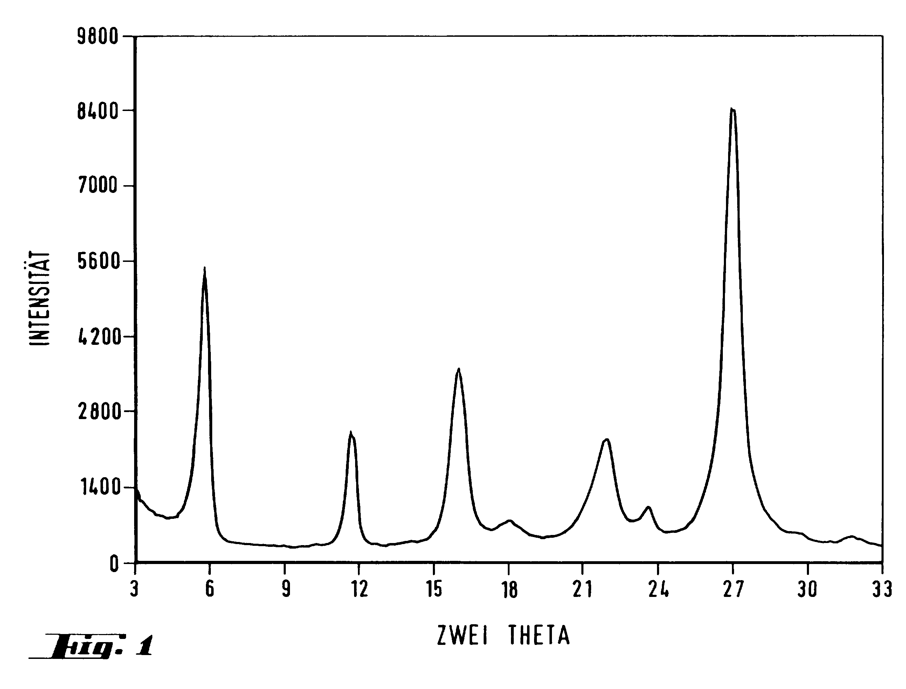

Charakteristische Peaks der α-Phase fehlen in Figur 1 vollständig.

In den nachfolgenden Beispielen beziehen sich Teile jeweils auf Gewichtsteile und Prozente jeweils auf Gewichtsprozente.

### Beispiel 1

50,2 Teile 2,5-Dianilinoterephthalsäure werden unter Rühren bei 80 bis 90°C in 250 Teile Polyphosphorsäure, die 82,7 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

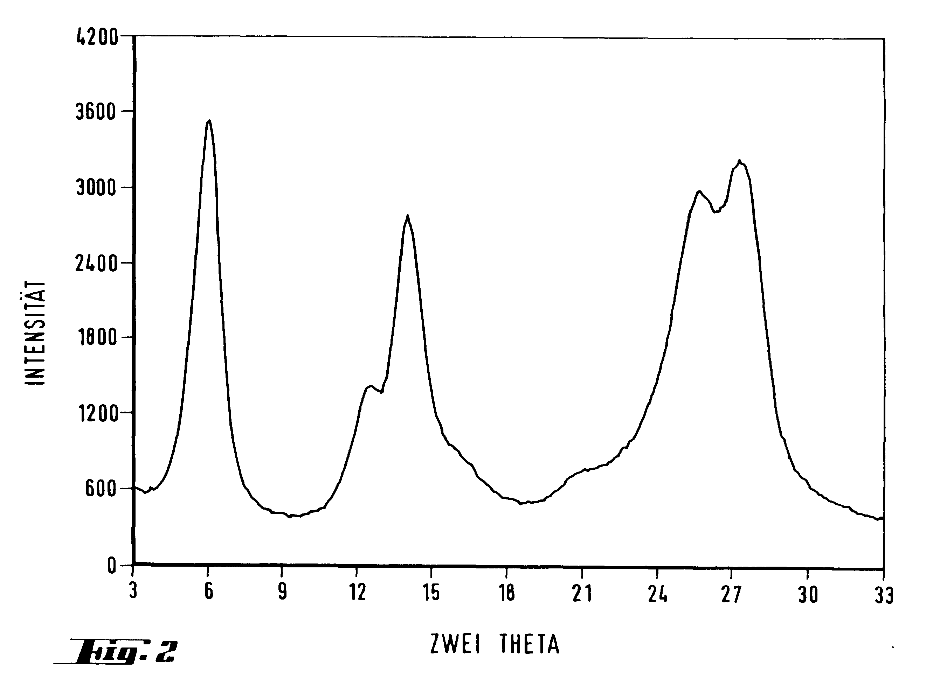

Man erhält 219,8 Teile eines 20,46 %igen Preßkuchens aus Chinacridon-Rohpigment, das überwiegend in der α-Phase (Figur 2) vorliegt.

In eine Rührwerkskugelmühle vom Typ Drais PML (Hersteller: Draiswerke GmbH Mannheim), die mit 1586 Teilen Zirkonmischoxidperlen vom Durchmesser 0,3 bis 0,4 mm als Mahlkörper gefüllt ist, wird eine Suspension, bestehend aus 219,8 Teilen des Chinacridon-Rohpigment-Preßkuchens (20,46 %ig), 161 Teilen Wasser, 20,2 Teilen Isobutanol (100 %ig) und 4 Teilen Natriumhydroxid (100 %ig), eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Nach der Mahlung wird die Mahlgutsuspension von den Mahlkörpern abgetrennt.

270 Teile dieser Mahlgutsuspension werden in ein Rührgefäß eingefüllt, 90 Teile Isobutanol (100 %ig) zugegeben und 5 Stunden auf 150°C unter Druck erhitzt. Nach dem Abkühlen auf 90°C wird das Isobutanol bis 100°C am Übergang azeotrop abdestilliert. Die Suspension wird auf 60°C abgekühlt, das Pigment abgesaugt, mit Wasser neutral gewaschen und bei 80°C getrocknet.

Man erhält 29,3 Teile Pigment, das in der β-Phase (Figur 1) vorliegt. Im PUR-Lack werden sehr farbstarke rotviolette Lackierungen erhalten. Die Rheologie wird mit 5 bewertet. Die Viskosität beträgt 11,2 s und die Glanzmessung ergibt den Wert 89. Im AM-Lack werden farbstarke Lackierungen erhalten.

### Beispiel 2

50,2 Teile 2,5-Dianilinoterephthalsäure werden unter Rühren bei 80 bis 90°C in 250 Teile Polyphosphorsäure, die 80,3 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 214,3 Teile eines 21,0 %igen Preßkuchens aus Chinacridon-Rohpigment, das überwiegend in der α-Phase vorliegt.

In eine Rührwerkskugelmühle vom Typ Drais PML (Hersteller: Draiswerke GmbH Mannheim), die mit 1586 Teilen Zirkonmischoxidperlen vom Durchmesser 0,3 bis 0,4 mm als Mahlkörper gefüllt ist, wird eine Suspension, bestehend aus 214,3 Teilen des Chinacridon-Rohpigment-Preßkuchens ( 21,0 %ig), 166,5 Teilen Wasser, 20,2 Teilen Isobutanol (100 %ig) und 4 Teilen Natriumhydroxid (100 %ig), eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Nach der Mahlung wird die Mahlgutsuspension von den Mahlkörpern abgetrennt.

270 Teile dieser Mahlgutsuspension werden in ein Rührgefäß eingefüllt, 90 Teile Isobutanol (100 %ig) zugegeben und 5 Stunden auf 150°C unter Druck erhitzt. Nach dem Abkühlen auf 90°C wird das Isobutanol bis 100°C am Übergang azeotrop abdestilliert. Die Suspension wird auf 60°C abgekühlt, das Pigment abgesaugt, mit Wasser neutral gewaschen und bei 80°C getrocknet.

Man erhält 29,7 Teile Pigment, das in der β-Phase vorliegt. Im AM-Lack werden sehr transparente und farbstarke Lackierungen erhalten.

### Beispiel 3

50,2 Teile 2,5-Dianilinoterephthalsäure werden unter Rühren bei 80 bis 90°C in 250 Teile Polyphosphorsäuremethylester, der 82,0 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 232,7 Teile eines 19,33 %igen Preßkuchens aus Chinacridon-Rohpigment, das überwiegend in der α-Phase vorliegt.

In ein Rührgefäß werden 155,2 Teile des Chinacridon-Rohpigment-Preßkuchens (19,33 %ig), 174,8 Teile Wasser, 90 Teile Isobutanol (100 %ig) und 3 Teile Natriumhydroxid (100 %ig) eingefüllt und 5 Stunden auf 150°C unter Druck erhitzt. Nach dem Abkühlen auf 90°C wird das Isobutanol bis 100°C am Übergang azeotrop abdestilliert. Die Suspension wird auf 60°C abgekühlt, das Pigment abgesaugt, mit Wasser neutral gewaschen und bei 80°C getrocknet. Man erhält 29,1 Teile Pigment, das in der β-Phase vorliegt. Im AM-Lack werden transparente und farbstarke Lackierungen erhalten. Die Drucke im NC-Druck sind farbstark und glänzend.

### Beispiel 4

50,2 Teile 2,5-Dianilinoterephthalsäure werden unter Rühren bei 80 bis 90°C in 250 Teile Polyphosphorsäuremethylester, der 82,0 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 212,7 Teile eines 21,15 %igen Preßkuchens aus Chinacridon-Rohpigment, das überwiegend in der α-Phase vorliegt.

In ein Rührgefäß werden 141,8 Teile des Chinacridon-Rohpigment-Preßkuchens (21,15 %ig), 188,2 Teile Wasser, 90 Teile Isobutanol (100 %ig) und 1,5 Teile Natriumhydroxid (100 %ig) eingefüllt und 5 Stunden auf 150°C unter Druck erhitzt. Nach dem Abkühlen auf 90°C wird das Isobutanol bis 100°C am Übergang azeotrop abdestilliert. Die Suspension wird auf 60°C abgekühlt, das Pigment abgesaugt, mit Wasser neutral und salzfrei gewaschen und bei 80°C getrocknet.

Man erhält 29,4 Teile Pigment, das in der β-Phase vorliegt. Im AM-Lack werden farbstarke Lackierungen erhalten.

### Beispiel 5

50,2 Teile 2,5-Dianilinoterephthalsäure werden unter Rühren bei 80 bis 90°C in 250 Teile Polyphosphorsäuremethylester, der 82,0 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 212,7 Teile eines 21,15 %igen Preßkuchens aus Chinacridon-Rohpigment, das überwiegend in der α-Phase vorliegt.

In ein Rührgefäß werden 141,8 Teile des Chinacridon-Rohpigment-Preßkuchens (21,15 %ig), 187,7 Teile Wasser, 90 Teile Isobutanol (100 %ig) und 3,5 Teile Kaliumhydroxid (85 %ig) eingefüllt und 5 Stunden auf 150°C unter Druck erhitzt. Nach dem Abkühlen auf 90°C wird das Isobutanol bis 100°C am Übergang azeotrop abdestilliert. Die Suspension wird auf 60°C abgekühlt, das Pigment abgesaugt, mit Wasser neutral gewaschen und bei 80°C getrocknet.

Man erhält 29,9 Teile Pigment, das in der β-Phase vorliegt. Im AM-Lack werden farbstarke Lackierungen erhalten.

### Beispiel 6

50,2 Teile 2,5-Dianilinoterephthalsäure werden unter Rühren bei 80 bis 90°C in 250 Teile Polyphosphorsäuremethylester, der 82,0 % P₂O₅ enthält, eingetragen und 1 Stunde auf 125°C erhitzt, wobei der Ringschluß zum Chinacridon erfolgt.

Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 204,5 Teile eines 22,0 %igen Preßkuchens aus Chinacridon-Rohpigment, das überwiegend in der α-Phase vorliegt.

In eine Rührwerkskugelmühle vom Typ Drais PM1 (Hersteller: Draiswerke GmbH Mannheim), die mit 1000 Teilen Quarzperlen vom Durchmesser 1,0 mm als Mahlkörper gefüllt ist, wird eine Suspension, bestehend aus 159 Teilen des Chinacridon-Rohpigment-Preßkuchens (22,0 %ig), 172,1 Teilen Wasser, 15,8 Teilen Isobutanol (100 %ig) und 3,2 Teilen Natriumhydroxid (100 %ig), eindosiert und mit einer Rührwerksdrehzahl von 2790 U/Min 2 Stunden lang bei 25°C gemahlen. Nach der Mahlung wird die Mahlgutsuspension von den Mahlkörpern abgetrennt.

300 Teile dieser Mahlgutsuspension werden in ein Rührgefäß eingefüllt, 90 Teile Isobutanol (100 %ig) zugegeben und 5 Stunden auf 150°C unter Druck erhitzt. Nach dem Abkühlen auf 90°C wird das Isobutanol bis 100°C am Übergang azeotrop abdestilliert. Die Suspension wird auf 60°C abgekühlt, das Pigment abgesaugt, mit Wasser neutral gewaschen und bei 80°C getrocknet.

Man erhält 29,7 Teile Pigment, das in der β-Phase vorliegt. Im AM-Lack werden sehr transparente und farbstarke Lackierungen erhalten.

### Beispiel 7

50,2 Teile 2,5-Dianilinoterephthalsäure werden unter Rühren bei 80 bis 90°C in 250 Teile Polyphosphorsäuremethylester, der 82,0 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 219,5 Teile eines 20,5 %igen Preßkuchens aus Chinacridon-Rohpigment, das überwiegend in der α-Phase vorliegt.

In eine Rührwerkskugelmühle vom Typ Drais PML (Hersteller: Draiswerke GmbH Mannheim), die mit 1586 Teilen Zirkonmischoxidperlen vom Durchmesser 0,3 bis 0,4 mm als Mahlkörper gefüllt ist, wird eine Suspension, bestehend aus 219,5 Teilen des Chinacridon-Rohpigment-Preßkuchens (20,5 %ig), 181,5 Teilen Wasser und 4 Teilen Natriumhydroxid (100 %ig), eindosiert und mit einer Rührwerksumfangsgeschwindigkeit von 15,6 m/s sowie einer spezifischen Leistungsdichte von 3,1 kW pro Liter Mahlraum 30 Minuten lang bei 25°C gemahlen. Nach der Mahlung wird die Mahlgutsuspension von den Mahlkörpern abgetrennt.

270 Teile dieser Mahlgutsuspension werden in ein Rührgefäß eingefüllt, 90 Teile Isobutanol (100 %ig) zugegeben und 5 Stunden auf 150°C unter Druck erhitzt. Nach dem Abkühlen auf 90°C wird das Isobutanol bis 100°C am Übergang azeotrop abdestilliert. Die Suspension wird auf 60°C abgekühlt, das Pigment abgesaugt, mit Wasser neutral gewaschen und bei 80°C getrocknet.

Man erhält 29,3 Teile Pigment, das in der β-Phase vorliegt. Im AM-Lack werden transparente und farbstarke Lackierungen erhalten.

### Beispiel 8

50,2 Teile 2,5-Dianilinoterephthalsäure werden unter Rühren bei 80 bis 90°C in 250 Teile Polyphosphorsäuremethylester, der 82,0 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 212,7 Teile eines 21,15 %igen Preßkuchens aus Chinacridon-Rohpigment, das überwiegend in der α-Phase vorliegt.

In ein Rührgefäß werden 141,8 Teile des Chinacridon-Rohpigment-Preßkuchens (21,15 %ig), 188,2 Teile Wasser, 90 Teile n-Butanol (100 %ig) und 3 Teile Natriumhydroxid (100 %ig) eingefüllt und 5 Stunden auf 150°C unter Druck erhitzt. Nach dem Abkühlen auf 90°C wird das n-Butanol bis 100°C am Übergang azeotrop abdestilliert. Die Suspension wird auf 60°C abgekühlt, das Pigment abgesaugt, mit Wasser neutral gewaschen und bei 80°C getrocknet.

Man erhält 29,9 Teile Pigment, das in der β-Phase vorliegt. Im AM-Lack werden transparente und farbstarke Lackierungen erhalten.

### Beispiel 9

50,2 Teile 2,5-Dianilinoterephthalsäure werden unter Rühren bei 80 bis 90°C in 250 Teile Polyphosphorsäuremethylester, der 82,0 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 212,7 Teile eines 21,15 %igen Preßkuchens aus Chinacridon-Rohpigment, das überwiegend in der α-Phase vorliegt.

In eine Rührwerkskugelmühle vom Typ Drais PML (Hersteller: Draiswerke GmbH Mannheim), die mit 1586 Teilen Zirkonmischoxidperlen vom Durchmesser 0,3 bis 0,4 mm als Mahlkörper gefüllt ist, wird eine Suspension, bestehend aus 212,7 Teilen des Chinacridon-Rohpigment-Preßkuchens (21,15 %ig), 168,1 Teilen Wasser, 20,2 Teilen Isopropanol (100 %ig) und 4 Teilen Natriumhydroxid (100 %ig), eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Nach der Mahlung wird die Mahlgutsuspension von den Mahlkörpern abgetrennt.

270 Teile dieser Mahlgutsuspension werden in ein Rührgefäß eingefüllt, 65 Teile Isopropanol (100 %ig) zugegeben und 5 Stunden auf 150°C unter Druck erhitzt. Nach dem Abkühlen auf 90°C wird das Isopropanol bis 100°C am Übergang azeotrop abdestilliert. Die Suspension wird auf 60°C abgekühlt, das Pigment abgesaugt, mit Wasser neutral gewaschen und bei 80°C getrocknet.

Man erhält 29,3 Teile Pigment, das in der β-Phase vorliegt. Im AM-Lack werden farbstarke Lackierungen erhalten. Die Rheologie wird mit 4-5 bewertet. Die Viskosität beträgt 6,1 s und die Glanzmessung ergibt den Wert 62. In PVC werden farbstarke Ausfärbungen mit einwandfreier Ausblutechtheit erhalten.

### Beispiel 10

50,2 Teile 2,5-Dianilinoterephthalsäure werden unter Rühren bei 80 bis 90°C in 250 Teile Polyphosphorsäure, die 82,7 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 212,7 Teile eines 21,15 %igen Preßkuchens aus Chinacridon-Rohpigment, das überwiegend in der α-Phase vorliegt.

In ein Rührgefäß werden 189,1 Teile des Chinacridon-Rohpigment-Preßkuchens (21,15 %ig), 250,9 Teile Wasser, 21 Teile Isobutanol (100 %ig) und 4 Teile Natriumhydroxid (100 %ig) eingefüllt und 5 Stunden auf 175°C unter Druck erhitzt. Nach dem Abkühlen auf 90°C wird das Isobutanol bis 100°C am Übergang azeotrop abdestilliert. Die Suspension wird auf 60°C abgekühlt, das Pigment abgesaugt, mit Wasser neutral gewaschen und bei 80°C getrocknet.

Man erhält 38,8 Teile Pigment, das überwiegend in der β-Phase vorliegt. Im AM-Lack werden transparente und farbstarke Lackierungen erhalten. Die Viskosität beträgt 5,1 s und die Rheologie wird mit 5 bewertet.

### Beispiel 11

50,2 Teile 2,5-Dianilinoterephthalsäure werden unter Rühren bei 80 bis 90°C in 250 Teile Polyphosphorsäuremethylester, der 82,0 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 212,7 Teile eines 21,15 %igen Preßkuchens aus Chinacridon-Rohpigment, das überwiegend in der α-Phase vorliegt.

In eine Rührwerkskugelmühle vom Typ Drais PML (Hersteller: Draiswerke GmbH Mannheim), die mit 1586 Teilen Zirkonmischoxidperlen vom Durchmesser 0,3 bis 0,4 mm als Mahlkörper gefüllt ist, wird eine Suspension, bestehend aus 212,7 Teilen des Chinacridon-Rohpigment-Preßkuchens (21,15 %ig), 168,1 Teilen Wasser, 20,2 Teilen Isobutanol (100 %ig) und 4 Teilen Natriumhydroxid (100 %ig), eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Nach der Mahlung wird die Mahlgutsuspension von den Mahlkörpern abgetrennt.

270 Teile dieser Mahlgutsuspension werden in ein Rührgefäß eingefüllt, 90 Teile Isobutanol (100 %ig) zugegeben und 5 Stunden auf 150°C unter Druck erhitzt. Nach dem Abkühlen auf 90°C werden 1,5 Teile Pigmentdispergator der Formel (I), in der P für den Chinacridonrest steht, X die Gruppe (III) ist, worin R⁴ ein Wasserstoffatom und R⁵ und R⁶ jeweils eine Ethylgruppe bedeutet und n die Zahl 3 und o die Zahl 2 ist, zugegeben. Danach wird das Isobutanol bis 100°C am Übergang azeotrop abdestilliert. Die Suspension wird auf 60°C abgekühlt, die Pigmentzubereitung abgesaugt, mit Wasser neutral gewaschen und bei 80°C getrocknet.

Man erhält 30,8 Teile Pigmentzubereitung, die in der β-Phase vorliegt. Im AM-Lack werden sehr transparente und sehr farbstarke Lackierungen erhalten, die besonders flockungsstabil sind. Die Rheologie wird mit 5 bewertet. Die Viskosität beträgt 3,3 s und die Glanzmessung ergibt den Wert 85.

### Beispiel 12

50,2 Teile 2,5-Dianilinoterephthalsäure werden unter Rühren bei 80 bis 90°C in 250 Teile Polyphosphorsäure, die 82,7 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 219,8 Teile eines 20,46 %igen Preßkuchens aus Chinacridon-Rohpigment, das überwiegend in der α-Phase vorliegt.

In ein Rührgefäß werden 195,5 Teile des Chinacridon-Rohpigment-Preßkuchens (20,46 %ig), 244,5 Teile Wasser, 120 Teile Isobutanol (100 %ig) und 4 Teile Natriumhydroxid (100 %ig) eingefüllt und 5 Stunden auf 150°C unter Druck erhitzt. Nach dem Abkühlen auf 90°C werden 11,5 Teile Pigmentdispergator der Formel (I) als 34,8 %iger wasserfeuchter Preßkuchen hinzugefügt, worin P den Chinacridonrest und X die Gruppe der Formel (II) bedeutet, worin A ein Imidazolylrest, R¹ eine Methylgruppe, R² und R³ je ein Wasserstoffatom und m die Zahl 1,8 sind. Danach wird das Isobutanol bis 100°C am Übergang azeotrop abdestilliert. Die Suspension wird auf 60°C abgekühlt, die Pigmentzubereitung abgesaugt, mit Wasser neutral gewaschen und bei 80°C getrocknet.

Man erhält 43,8 Teile Pigmentzubereitung, die in der β-Phase vorliegt. Im AM-Lack werden transparente und farbstarke Lackierungen erhalten. Die Rheologie wird mit 5 bewertet.

### Beispiel 13

50,2 Teile 2,5-Dianilinoterephthalsäure werden unter Rühren bei 80 bis 90°C in 250 Teile Polyphosphorsäuremethylester, der 82,0 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 212,7 Teile eines 21,15 %igen Preßkuchens aus Chinacridon-Rohpigment, das überwiegend in der α-Phase vorliegt.

In eine Rührwerkskugelmühle vom Typ Drais PML (Hersteller: Draiswerke GmbH Mannheim), die mit 1586 Teilen Zirkonmischoxidperlen vom Durchmesser 0,3 bis 0,4 mm als Mahlkörper gefüllt ist, wird eine Suspension, bestehend aus 212,7 Teilen des Chinacridon-Rohpigment-Preßkuchens (21,15 %ig), 168,1 Teilen Wasser, 20,2 Teilen Isopropanol (100 %ig) und 4 Teilen Natriumhydroxid (100 %ig) eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Nach der Mahlung wird die Mahlgutsuspension von den Mahlkörpern abgetrennt.

270 Teile dieser Mahlgutsuspension werden in ein Rührgefäß eingefüllt, 65 Teile Isobutanol (100 %ig) zugegeben und 5 Stunden auf 150°C unter Druck erhitzt. Nach dem Abkühlen auf 90°C wird das Isopropanol bis 100°C am Übergang azeotrop abdestilliert. Es wird auf 60°C abgekühlt, 43,1 Teile Ethanol und 9,7 Teile eines Alkylphenolpolyglykolethersulfats als 10 %ige wäßrige Lösung zugegeben und mit 10 %iger Salzsäure auf pH 2 gestellt. Die Suspension wird 1 Stunde bei dieser Temperatur gerührt, danach das Pigment abgesaugt, mit Wasser neutral und salzfrei gewaschen und bei 80°C getrocknet.

Man erhält 29,3 Teile Pigment, das in der β-Phase vorliegt. Im AM-Lack werden transparente und farbstarke Lackierungen mit sehr guter Dispergierbarkeit erhalten. Die Rheologie wird mit 5 bewertet.

### Beispiel 14

50,2 Teile 2,5-Dianilinoterephthalsäure werden unter Rühren bei 80 bis 90°C in 250 Teile Polyphosphorsäure, die 82,7 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 231,9 Teile eines 19,4 %igen Preßkuchens aus Chinacridon-Rohpigment, das überwiegend in der α-Phase vorliegt.

In ein Rührgefäß werden 154,6 Teile des Chinacridon-Rohpigment-Preßkuchens (19,4 %ig), 175,4 Teile Wasser, 90 Teile Isobutanol (100 %ig) und 4 Teile Kaliumhydroxid (85 %ig) eingefüllt und 5 Stunden auf 150°C unter Druck erhitzt. Nach dem Abkühlen auf 90°C wird das Isobutanol bis 100°C am Übergang azeotrop abdestilliert. Bei dieser Temperatur wird eine Lösung aus 7,5 Teilen Wasser, 0,4 Teilen Kaliumhydroxid (85 %ig) und 2,14 Teilen Kaliumperoxodisulfat zugegeben, 1 Stunde bei 100°C nachgerührt, auf 60°C abgekühlt, das Pigment abgesaugt, mit Wasser neutral und salzfrei gewaschen und bei 80°C getrocknet.

Man erhält 28,9 Teile Pigment, das in der β-Phase vorliegt. Im AM-Lack werden transparente, farbtiefe und farbstarke Lackierungen erhalten.

### Beispiel 15

50,2 Teile 2,5-Dianilinoterephthalsäure werden unter Rühren bei 80 bis 90°C in 250 Teile Polyphosphorsäure, die 82,7 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 219,8 Teile eines 20,46 %igen Preßkuchens aus Chinacridon-Rohpigment, das überwiegend in der α-Phase vorliegt.

In eine Rührwerkskugelmühle vom Typ Drais PML (Hersteller: Draiswerke GmbH Mannheim), die mit 1586 Teilen Zirkonmischoxidperlen vom Durchmesser 0,3 bis 0,4 mm als Mahlkörper gefüllt ist, wird eine Suspension, bestehend aus 219,8 Teilen des Chinacridon-Rohpigment-Preßkuchens (20,46 %ig), 161 Teilen Wasser, 20,2 Teilen Isobutanol (100 %ig) und 4 Teilen Natriumhydroxid (100 %ig), eindosiert und mit einer Rührwerksumfangsgeschwindigkeit von 15,6 m/s sowie einer spezifischen Leistungsdichte von 3,1 kW pro Liter Mahlraum 10 Minuten lang bei 25°C gemahlen. Nach der Mahlung wird die Mahlgutsuspension von den Mahlkörpern abgetrennt.

270 Teile dieser Mahlgutsuspension werden in ein Rührgefäß eingefüllt, 90 Teile Isobutanol (100 %ig) zugegeben und 5 Stunden auf 150°C unter Druck erhitzt. Nach dem Abkühlen auf 90°C wird das Isobutanol bis 100°C am Übergang azeotrop abdestilliert. Danach wird bei dieser Temperatur eine Lösung aus 7,5 Teilen Wasser, 0,33 Teilen Natriumhydroxid (100 %ig) und 1,88 Teilen Natriumperoxodisulfat zugegeben. Die Suspension wird 1 Stunde bei 100°C gerührt, danach auf 60°C abgekühlt, das Pigment abgesaugt, mit Wasser neutral und salzfrei gewaschen und bei 80°C getrocknet.

Man erhält 29,3 Teile Pigment, das in der β-Phase vorliegt. Im AM-Lack werden transparente Lackierungen erhalten, die sich durch besondere Farbtiefe und Farbstärke auszeichnen. Im HSS-Lack werden ebenfalls farbtiefe und farbstarke Lackierungen erhalten. Die Rheologie wird mit 4 bewertet und die Glanzmessung ergibt den Wert 32.

### Beispiel 16

50,2 Teile 2,5-Dianilinoterephthalsäure werden unter Rühren bei 80 bis 90°C in 250 Teile Polyphosphorsäure, die 82,7 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 231,9 Teile eines 19,4 %igen Preßkuchens aus Chinacridon-Rohpigment, das überwiegend in der α-Phase vorliegt.

In ein Rührgefäß werden 154,6 Teile des Chinacridon-Rohpigment-Preßkuchens (19,4 %ig), 175,4 Teile Wasser, 90 Teile Isobutanol (100 %ig) und 3 Teile Natriumhydroxid (85 %ig) eingefüllt und 5 Stunden auf 150°C unter Druck erhitzt. Nach dem Abkühlen auf 90°C wird das Isobutanol bis 100°C am Übergang azeotrop abdestilliert. Danach wird bei dieser Temperatur eine Lösung aus 7,5 Teilen Wasser, 0,15 Teilen Natriumhydroxid (100 %ig) und 0,94 Teilen Natriumperoxodisulfat zugegeben. Die Suspension wird 1 Stunde bei 100°C gerührt, danach auf 60°C abgekühlt, das Pigment abgesaugt, mit Wasser neutral und salzfrei gewaschen und bei 80°C getrocknet.
Man erhält 28,8 Teile Pigment, das in der β-Phase vorliegt. Im AM-Lack werden transparente, farbtiefe und farbstarke Lackierungen erhalten.

### Beispiel 17

50,2 Teile 2,5-Dianilinoterephthalsäure werden unter Rühren bei 80 bis 90°C in 250 Teile Polyphosphorsäure, die 82,7 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 231,9 Teile eines 19,4 %igen Preßkuchens aus Chinacridon-Rohpigment, das überwiegend in der α-Phase vorliegt.

In ein Rührgefäß werden 154,6 Teile des Chinacridon-Rohpigment-Preßkuchens (19,4 %ig), 175,4 Teile Wasser, 90 Teile Isobutanol (100 %ig) und 3 Teile Natriumhydroxid (85 %ig) eingefüllt und 5 Stunden auf 150°C unter Druck erhitzt. Nach dem Abkühlen auf 90°C wird das Isobutanol bis 100°C am Übergang azeotrop abdestilliert. Bei dieser Temperatur werden 1,88 Teile Natriumperoxodisulfat zugegeben. Die Suspension wird 1 Stunde bei 100°C gerührt, danach auf 60°C abgekühlt, das Pigment abgesaugt, mit Wasser neutral und salzfrei gewaschen und bei 80°C getrocknet.

Man erhält 29,4 Teile Pigment, das in der β-Phase vorliegt. Im AM-Lack werden transparente, farbtiefe und farbstarke Lackierungen erhalten.

### Vergleichsbeispiel

Erfolgt die oxidative Nachbehandlung an Stelle von Natriumperoxodisulfat mit der äquivalenten Menge Natriumperborat, Wasserstoffperoxid oder durch Einleiten von Luft, wie in der EP-A 0 517 663 beschrieben, so wird bei der anschließenden Lackierung der Pigmente im AM-Lack keine Farbvertiefung und keine Farbstärkezunahme festgestellt.

### Beispiel 18

50,2 Teile 2,5-Dianilinoterephthalsäure werden unter Rühren bei 80 bis 90°C in 250 Teile Polyphosphorsäure, die 82,7 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 231,9 Teile eines 19,4 %igen Preßkuchens aus Chinacridon-Rohpigment, das überwiegend in der α-Phase vorliegt.

In ein Rührgefäß werden 154,6 Teile des Chinacridon-Rohpigment-Preßkuchens (19,4 %ig), 175,4 Teile Wasser, 90 Teile Isobutanol (100 %ig) und 3 Teile Natriumhydroxid (85 %ig) eingefüllt und 5 Stunden auf 150°C unter Druck erhitzt. Nach dem Abkühlen auf 90°C wird das Isobutanol bis 100°C am Übergang azeotrop abdestilliert. Danach wird das Reaktionsgemisch auf 60°C abgekühlt und bei dieser Temperatur eine Lösung aus 7,5 Teilen Wasser, 0,33 Teilen Natriumhydroxid (100 %ig) und 1,88 Teilen Natriumperoxodisulfat zugegeben. Die Suspension wird 1 Stunde bei 60°C gerührt, danach das Pigment abgesaugt, mit Wasser neutral und salzfrei gewaschen und bei 80°C getrocknet.

Man erhält 29,0 Teile Pigment, das in der β-Phase vorliegt. Im AM-Lack werden transparente, farbtiefe und farbstarke Lackierungen erhalten.

### Beispiel 19

50,2 Teile 2,5-Dianilinoterephthalsäure werden unter Rühren bei 80 bis 90°C in 250 Teile Polyphosphorsäure, die 82,7 % P₂O₅ enthält, eingetragen und 1 Stunde auf 125°C erhitzt, wobei der Ringschluß zum Chinacridon erfolgt. Danach wird das Reaktionsgemisch unter Rühren mit 1125 Teilen Wasser bei einer Temperatur von 80°C hydrolysiert, 1 Stunde bei 105°C gerührt, abgesaugt und neutral gewaschen.

Man erhält 231,9 Teile eines 19,4 %igen Preßkuchens aus Chinacridon-Rohpigment, das überwiegend in der α-Phase vorliegt.

In ein Rührgefäß werden 154,6 Teile des Chinacridon-Rohpigment-Preßkuchens (19,4 %ig), 175,4 Teile Wasser, 90 Teile Isobutanol (100 %ig) und 3 Teile Natriumhydroxid (85 %ig) eingefüllt und 5 Stunden auf 150°C unter Druck erhitzt. Nach dem Abkühlen auf 90°C wird das Isobutanol bis 100°C am Übergang azeotrop abdestilliert. Anschließend wird auf 150°C geheizt und bei dieser Temperatur eine Lösung aus 7,5 Teilen Wasser, 0,33 Teilen Natriumhydroxid (100 %ig) und 1,88 Teilen Natriumperoxodisulfat zudosiert. Die Suspension wird 1 Stunde bei 150°C gerührt, danach auf 60°C abgekühlt, das Pigment abgesaugt, mit Wasser neutral und salzfrei gewaschen und bei 80°C getrocknet.

Man erhält 28,5 Teile Pigment, das in der β-Phase vorliegt. Im AM-Lack werden transparente, farbtiefe und farbstarke Lackierungen erhalten.

## Patentansprüche

1. Verfahren zur Herstellung von linearen, unsubstituierten Chinacridonpigmenten oder -pigmentzubereitungen der β-Phase, dadurch gekennzeichnet, daß man
a) 2,5-Dianilinoterephthalsäure in Polyphosphorsäure oder einem Polyphosphorsäureester zum Chinacridon cyclisiert,
b) anschließend mit Wasser bei einer Temperatur von mindestens 40°C zum feinteiligen Chinacridon-Rohpigment, das überwiegend in der α-Phase vorliegt, hydrolysiert,
c) dann gegebenenfalls das feinteilige Chinacridon-Rohpigment aus b) einer Naßmahlung zum Präpigment unterwirft und
d) dann das Rohpigment aus b) oder das Präpigment aus c) in Gegenwart einer 0,05 bis 0,3 fachen Menge einer anorganischen Base, bezogen auf das Gewicht des Rohpigments, in einem inerten flüssigen Medium auf eine Temperatur zwischen 120 und 200°C erhitzt.

2. Verfahren gemäß Anspruch 1, dadurch gekennzeichnet, daß die Naßmahlung im wäßrigen oder wäßrig-organischen Medium in Gegenwart einer anorganischen Base durchgeführt wird.

3. Verfahren gemäß Anspruch 1, dadurch gekennzeichnet, daß der Schritt d) in Gegenwart einer 0,05 bis 0,113-fachen Menge einer anorganischen Base, bezogen auf das Gewicht des Rohpigments, durchgeführt wird.

4. Verfahren nach mindestens einem der Ansprüche 1 bis 3, dadurch gekennzeichnet, daß die anorganische Base als 0,1 bis 2,0 gew.-%ige, vorzugsweise 0,5 bis 1,5 gew.-%ige, wäßrige Lösung eingesetzt wird.

5. Verfahren nach mindestens einem der Ansprüche 1 bis 4, dadurch gekennzeichnet, daß die anorganische Base Natronlauge, Kalilauge Natriumcarbonat, Kaliumcarbonat, Ammoniak oder eine Mischung der genannten Basen ist.

6. Verfahren nach mindestens einem der Ansprüche 1 bis 5, dadurch gekennzeichnet, daß der Schritt d) in Gegenwart einer 0,5- bis 10-fachen, vorzugsweise 1- bis 5-fachen, Gewichtsmenge eines alkalibeständigen Lösemittels, bezogen auf das Gewicht des Rohpigments, durchgeführt wird.

7. Verfahren nach Anspruch 6, dadurch gekennzeichnet, daß das alkalibeständige Lösemittel ein C₁-C₆-Alkanol, vorzugsweise ein Butanol oder Isopropanol, ist.

8. Verfahren nach mindestens einem der Ansprüche 1 bis 7, dadurch gekennzeichnet, daß der Schritt d) bei einer Temperatur zwischen 125 bis 175°C durchgeführt wird.

9. Verfahren nach mindestens einem der Ansprüche 1 bis 8, dadurch gekennzeichnet, daß vor, während oder nach dem Schritt d) ein Pigmentdispergator der allgemeinen Formel (I) zugesetzt wird,
P - [X]ₘ (I)
worin
P für den m-wertigen Rest eines linearen, unsubstituierten Chinacridons steht, worin
m eine Zahl von 1 bis 4 ist,
X eine Gruppe der Formel (II) 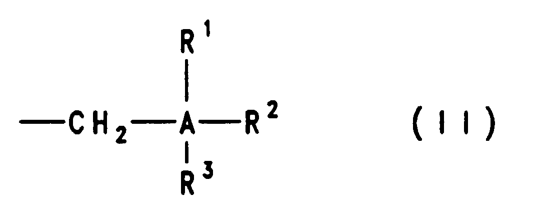
darstellt, worin A einen fünf- oder sechsgliedrigen aromatischen, gegebenenfalls kondensierten, Heterocyclus darstellt, welcher 1 bis 3 gleiche oder unterschiedliche Heteroatome aus der Reihe Stickstoff, Sauerstoff oder Schwefel enthält, vorzugsweise Imidazolyl oder Indolyl, und der Heterocyclus über ein Kohlenstoffatom an die Methylengruppe gebunden ist, R¹ und R² ein Wasserstoffatom, eine C₁-C₄-Alkyl-, eine C₂-C₄-Alkenyl- oder eine Arylgruppe, vorzugsweise Phenylgruppe, bedeuten, oder R¹ und R² gemeinsam einen aliphatischen oder aromatischen Ring bilden, R³ ein Wasserstoffatom, eine C₁-C₄-Alkyl-, eine C₁-C₃-Hydroxyalkyl- oder eine C₂-C₄-Alkenylgruppe bedeutet,
oder worin
X eine Gruppe der Formel (III) 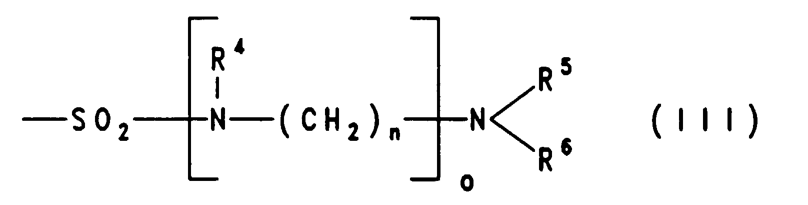
darstellt, worin R⁵ und R⁶ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R⁵ und R⁶ gemeinsam mit dem angrenzenden Stickstoffatom einen aliphatischen oder aromatischen, fünf- oder sechsgliedrigen heterocyclischen Ring bilden, mit jeweils 1 bis 3 ringangehörigen, gleichen oder unterschiedlichen Heteroatomen aus der Reihe Stickstoff, Sauerstoff oder Schwefel, vorzugsweise Morpholinyl oder Pyrrolidinyl, R⁴ ein Wasserstoffatom oder eine C₁-C₄-Alkylgruppe ist, n eine Zahl von 1 bis 6 und o die Zahl 1 oder 2 ist.

10. Verfahren nach mindestens einem der Ansprüche 1 bis 9, dadurch gekennzeichnet, daß man nach dem Schritt d) das Chinacridonpigment oder die Chinacridonpigmentzubereitung in Gegenwart eines Peroxodisulfats auf eine Temperatur zwischen 60 und 160°C erhitzt.

11. Verfahren nach Anspruch 10, dadurch gekennzeichnet, daß man 1 bis 10 Gew.-%, bezogen auf das Gewicht des Chinacridonpigments, Natrium-, Kalium- oder Ammoniumperoxodisulfat einsetzt.

## Claims

1. A process for preparing linear, unsubstituted quinacridone pigments or pigment preparations of the β-phase, which comprises
a) cyclizing 2,5-dianilinoterephthalic acid in poly-phosphoric acid or a polyphosphoric ester to the quinacridone,
b) then hydrolyzing the quinacridone with water at a temperature of at least 40°C to obtain a finely divided quinacridone pigment crude which is predominantly in the α-phase,
c) then optionally wet grinding the finely divided quinacridone pigment crude from b) to form a pre-pigment, and
d) then heating the crude pigment from b) or the pre-pigment from c) to a temperature between 120 and 200°C in the presence of from 0.05 to 0.3 times the amount of an inorganic base, based on the weight of the crude pigment, in an inert liquid medium.

2. The process of claim 1, wherein the wet grinding is carried out in the presence of an inorganic base in an aqueous or aqueous-organic medium.

3. The process of claim 1, wherein step d) is carried out in the presence of from 0.05 to 0.113 times the amount of an inorganic base, based on the weight of the crude pigment.

4. The process of at least one of claims 1 to 3, wherein the inorganic base is used in the form of a from 0.1 to 2.0% strength by weight, preferably from 0.5 to 1.5% strength by weight, aqueous solution.

5. The process of at least one of claims 1 to 4, wherein the inorganic base is sodium hydroxide, potassium hydroxide, sodium carbonate, potassium carbonate, ammonia or a mixture thereof.

6. The process of at least one of claims 1 to 5, wherein step d) is carried out in the presence of from 0.5 to 10 times, preferably from 1 to 5 times, the weight of an alkali-resistant solvent based on the weight of the crude pigment.

7. The process of claim 6, wherein the alkali-resistant solvent is a C₁-C₆-alkanol, preferably a butanol or isopropanol.

8. The process of at least one of claims 1 to 7, wherein step d) is carried out at a temperature between 125 and 175°C.

9. The process of at least one of claims 1 to 8, further comprising the addition, before, during or after step d), of a pigment dispersant of the formula (I)
P - [X]ₘ (I)
where
P is the m-valent radical of a linear, unsubstituted quinacridone where
m is from 1 to 4, and
X is a group of the formula (II) 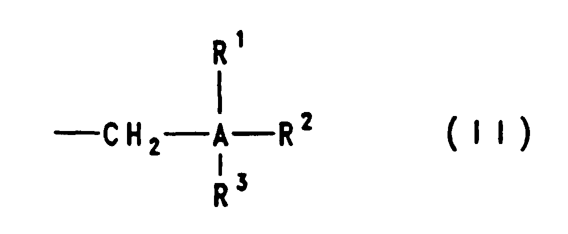 where A is a five- or six-membered aromatic, fused or unfused, heterocycle which contains from 1 to 3 identical or different heteroatoms from nitrogen, oxygen or sulfur, preferably imidazolyl or indolyl, and the heterocycle is bonded to the methylene group via a carbon atom, R¹ and R² are each a hydrogen atom or a C₁-C₄-alkyl, a C₂-C₄-alkenyl or an aryl group, preferably a phenyl group, or R¹ and R² are together an aliphatic or aromatic ring, R³ is a hydrogen atom, or a C₁-C₄-alkyl, a C₁-C₃-hydroxyalkyl or a C₂-C₄-alkenyl group,
or where
X is a group of the formula (III) 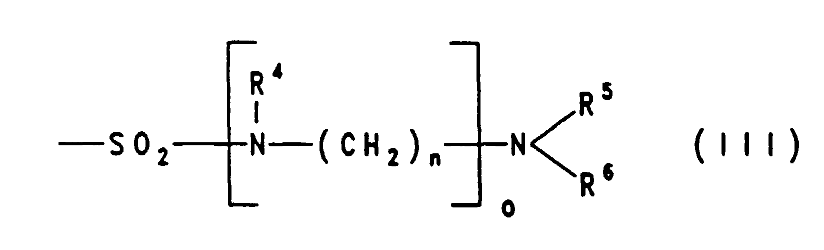 where R⁵ and R⁶ are each independently of the other a hydrogen atom or a C₁-C₂₀-alkyl, C₂-C₂₀-alkenyl or a C₅-C₇-cycloalkyl group, or where R⁵ and R⁶ are together with tne adjoining nitrogen atom an aliphatic or aromatic, five- or six-membered heterocyclic ring in each case with from 1 to 3 identical or different heteroatoms from nitrogen, oxygen or sulfur in the ring, preferably morpholinyl or pyrrolidinyl, R⁴ is a hydrogen atom or a C₁-C₄-alkyl group, n is from 1 to 6 and o is 1 or 2.

10. The process of at least one of claims 1 to 9 further comprising, after step d), heating the quinacridone pigment or quinacridone pigment preparation to a temperature between 60 and 160 °C in the presence of a peroxodisulfate.

11. The process of claim 10, wherein the peroxodisulfate used comprises from 1 to 10% by weight, based on the weight of the quinacridone pigment, of sodium, potassium or ammonium peroxodisulfate.

## Revendications

1. Procédé pour la préparation de pigments ou de compositions de pigments de quinacridone linéaire non substituée en phase β, caractérisé en ce que l'on
a) effectue la cyclisation de l'acide 2,5-dianilinophtalique ou d'un ester d'acide polyphosphorique pour obtenir la quinacridone,
b) hydrolyse ensuite avec de l'eau à une température d'au moins 40°C pour donner le pigment brut de quinacridone finement divisé, qui se présente de manière prépondérante dans la phase α,
c) effectue éventuellement un broyage humide du pigment brut de quinacridone finement divisé b) pour obtenir un pré-pigment et
d) chauffe ensuite le pigment brut de b) ou le pré-pigment de c) en présence d'une quantité de 0,05 fois à 0,3 fois d'une base inorganique, par rapport au poids du pigment brut, dans un milieu liquide inerte à une température entre 120 et 200°C.

2. Procédé selon la revendication 1, caractérisé en ce que l'on effectue le broyage humide dans un milieu aqueux ou aqueux-organique en présence d'une base inorganique.

3. Procédé selon la revendication 1, caractérisé en ce que l'on effectue l'étape d) en présence d'une quantité de 0,05 à 0,113 fois d'une base inorganique, par rapport au poids du pigment brut.

4. Procédé selon au moins une des revendications 1 à 3, caractérisé en ce que la base inorganique est utilisée sous la forme d'une solution aqueuse de 0,1 à 2,0% en poids, de préférence de 0,5 à 1,5% en poids.

5. Procédé selon au moins une des revendications 1 à 4, caractérisé en ce que la base inorganique est l'hydroxyde de sodium en solution, l'hydroxyde de potassium en solution, le carbonate de sodium, le carbonate de calcium, l'ammoniac ou un mélange des bases citées.

6. Procédé selon au moins une des revendications 1 à 5, caractérisé en ce que l'étape d) est réalisée en présence d'une quantité en poids de 0,5 à 10 fois, de préférence de 1 à 5 fois, la quantité en poids d'un solvant résistant aux solutions alcalines, par rapport au poids du pigment brut.

7. Procédé selon la revendication 6, caractérisé en ce que le solvant résistant aux alcalins est un alcanol en C₁-C₆, de préférence un butanol ou un isobutanol.

8. Procédé selon au moins une des revendications 1 à 7, caractérisé en ce que l'étape d) est réalisée à une température entre 125 et 175°C.

9. Procédé selon au moins une des revendications 1 à 8, caractérisé en ce que l'on ajoute avant, pendant ou après l'étape d), un agent dispersant des pigments de formule générale (I)
P-[X]ₘ (I)
dans laquelle
p représente le groupe de valence m d'une quinacridone linéaire non substituée, dans laquelle
m est un nombre de 1 à 4,
X représente un groupe de formule (II) 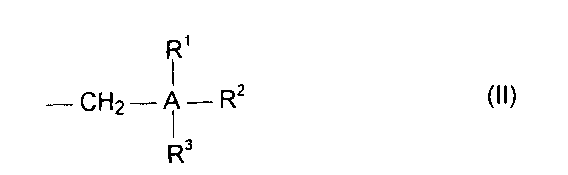
dans laquelle A représente un hétérocycle aromatique à cinq ou six chaînons, éventuellement condensé, qui contient 1 à 3 hétéroatomes identiques ou différents choisis parmi l'azote, l'oxygène ou le soufre, de préférence le groupe imidazolyle ou indolyle, et l'hétérocycle est lié via un atome de carbone au groupe méthylène, R¹ et R² représentent un atome d'hydrogène, un groupe alkyle en C₁-C₄, un groupe alcényle en C₂-C₄, ou un groupe aryle, de préférence un groupe phényle, ou R¹ et R² forment ensemble un cycle aliphatique ou aromatique, R³ représente un atome d'hydrogène, un groupe alkyle en C₁-C₄, un groupe hydroxyalkyle en C₁-C₃, ou un groupe alcényle en C₂-C₄,
ou dans laquelle
X représente un groupe de formule (III) 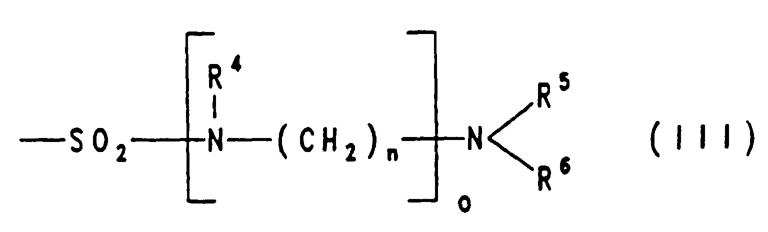
dans laquelle R⁵ et R⁶ représentent indépendamment l'un de l'autre respectivement un atome d'hydrogène, un groupe alkyle en C₁-C₂₀, un groupe alcényle en C₂-C₂₀ ou un groupe cycloalkyle en C₅-C₇, ou dans laquelle R⁵ et R⁶ forment ensemble avec l'atome d'azote auquel ils sont liés un cycle hétérocyclique aliphatique ou aromatique, à cinq ou six chaînons, ayant respectivement 1 à 3 hétéroatomes, identiques ou différents, faisant partie du cycle, choisis parmi l'azote, l'oxygène ou le soufre, de préférence un groupe morpholinyle ou pyrrolidinyle, R⁴ représente un atome d'hydrogène ou un groupe alkyle en C₁-C₄, n est un nombre de 1 à 6, et o le nombre 1 ou 2.

10. Procédé selon au moins une des revendications 1 à 9, caractérisé en ce que l'on chauffe le pigment de quinacridone ou la composition de pigment de quinacridone après l'étape d) en présence d'un peroxodisulfate à une température entre 60 et 160°C.

11. Procédé selon la revendication 10, caractérisé en ce que l'on utilise 1 à 10% en poids, par rapport au poids du pigment de quinacridone, de peroxodisulfate de sodium, de potassium ou d'ammonium.
